# EUROPEAN PATENT APPLICATION

(11) **EP 3 693 959 A1**
(43) Date of publication of application: **12.08.2020**
(21) Application number: 19155867.5
(22) Date of filing: 07.02.2019
(51) Int. Cl.: G10L 15/22, H04L 12/28, G06F 21/32

(54) **VOICE CONTROL SYSTEM FOR A DOMESTIC APPLIANCE, DOMESTIC APPLIANCE AND METHOD FOR CONTROLLING A DOMESTIC APPLIANCE**

(71) Applicant: ELECTROLUX APPLIANCES AKTIEBOLAG, 105 45 Stockholm (SE)
(72) Inventor: ZANETTI, Filippo, 47121 Forli (IT); MARTINI, Filippo, 47100 Forli (IT)
(74) Representative: Electrolux Group Patents

(57) **Abstract**

The present invention relates to a voice control system for a domestic appliance (DA). The voice control system comprises at least one presence detection sensor, in particular at least one acoustic sensor (10). The voice control system comprises at least one voice recognition device (12) and/or at least one user recognition device (14). The voice control system is adapted to communicate with the domestic appliance (DA). The voice control system is provided for activating the domestic appliance (DA) to communicate with a voice control communication device (16), in particular to process commands received from the voice control communication device (16), in dependence of the presence of an authorised user.

## Description

The present invention relates to a voice control system for a domestic appliance.

Currently, voice control is often used for controlling domestic appliances. For this purpose, voice control communication devices, for example "Google Home" (trademark, registered by Google LLC with effect for many countries), "ALEXA" (trademark, registered by Amazon Technologies, Inc. with effect for many countries) or "SIRI" (trademark, registered by Apple Inc. with effect for many countries), or the like, may be used. Said voice control communication devices are acoustic user interfaces, wherein acoustic sensors, e.g. microphones, are used as input units, while loud speaker and/or headphones are used as output units. The domestic appliance and the voice control communication device are connected to the internet. In a similar way, the connection between the domestic appliance and the internet on the one hand and between the voice control communication device and the internet on the other hand allows a remote control of the domestic appliance by said voice control communication devices via the internet.

However, the connectivity between the voice control communication device and the domestic appliance is problematic. There may be disturbances on the communication lines from and to the voice control communication device ending up with misinterpretation of signals or commands. It is also difficult to protect the privacy of the user. Further, there is a risk that the domestic appliance is used without permission or a non-authorized person, e. g. a hacker, may invade the connection. Moreover, currently a remote control of a cooking hob is not allowed.

It is an object of the present invention to provide a voice control system for a domestic appliance, which ensures that the domestic appliance is properly controllable and only controllable by the regular user attending the domestic appliance.

The object is achieved by the remote control system for a domestic appliance according to claim 1.

According to the present invention a voice control system for a domestic appliance is provided, wherein:
- the voice control system comprises at least one presence detection sensor, in particular at least one acoustic sensor,
- the voice control system comprises at least one voice recognition device and/or at least one user recognition device,
- the voice control system is adapted to communicate with the domestic appliance, and
- the voice control system is provided for activating the domestic appliance to communicate with a voice control communication device, in particular to process commands received from the voice control communication device, in dependence of the presence of an authorised user.

The core of the present invention is that the domestic appliance can be activated only by the voice control system, if an authorised user is really present. This avoids an access to the domestic appliance by domestic unauthorised persons or non-domestic invaders of the connection.

Preferably, the voice control system is an integrated part of a control unit of the domestic appliance.

Alternatively or additionally, the voice control system is connectable or connected to the control unit of the domestic appliance. In general, any type of connection can be considered, however, a wired connection is the preferred solution.

In particular, the voice control system comprises an acoustic sensor, in particular a microphone, for communicating with the domestic appliance. The main purpose is to detect the presence of an authorized user.

Preferably, the acoustic sensor, in particular the microphone, is provided for receiving the voice of the user.

Moreover, the voice control system may comprise an audio output device, in particular a loudspeaker, for communicating with the user.

In particular, the voice recognition device and/or the user recognition device is or are adapted for identifying a user specific signal or characteristic, preferably a user specific acoustic signal, or a signal, in particular an acoustic signal, assignable to a specific user. A user specific signal, specifically acoustic signal, may be anything which enables identification of a specific user, e. g. a user's output of a certain sequence of signals like tapping or knocking. Preferably, however, the user specific signal is the human voice.

Further, the voice recognition device and/or the user recognition device is or are adapted for identifying an authorised user. This may result from the identification of the user specific signal or the signal assignable to a specific user.

Further, the user recognition device is configured to compare at least one characteristic parameter of the user's voice with a predetermined threshold value or a set of predetermined threshold values.

For example, the at least one characteristic parameter of the user's voice is at least one of the frequency, amplitude, frequency pattern and/or amplitude pattern.

In another embodiment the voice control system is provided for triggering or prompting the domestic appliance to activate and/or deactivate the voice control communication device, in particular to switch on or off the voice control communication device, or to control the domestic appliance to forward or transmit a signal or command for activating or deactivating the voice control communication device. As an example, the voice control system is in control of the on/off-state of the voice control communication device via the domestic appliance, wherein the domestic appliance may have an active part or may just work as a conveyance system.

The object is further achieved by a domestic appliance, in particular a cooking appliance, especially an oven, a stove or a cooking hob, connected with and/or comprising a voice control system as described before according to claim 12.

The domestic appliance may comprise a control unit communicating with or including at least a part of the voice control system.

Finally, the object is also achieved by a method for controlling a domestic appliance by means of a signal, in particular an acoustic signal, according to claim 14. According to the method, a voice control system, in particular such one as described above, activates the domestic appliance, e. g. a domestic appliance as described above, by means of at least one voice recognition device and/or at least one user recognition device to communicate with a voice control communication device in dependence of the presence of an authorized user. "To communicate" may mean "to process commands" received from the voice control communication device.

A particularly preferred method is characterized by a user's signal and/or command, which may be one and the same user's signal and/or command, particularly simultaneously received and/or processed by both the voice control system and the voice control communication device.

Novel and inventive features of the present invention are set forth in the appended claims.

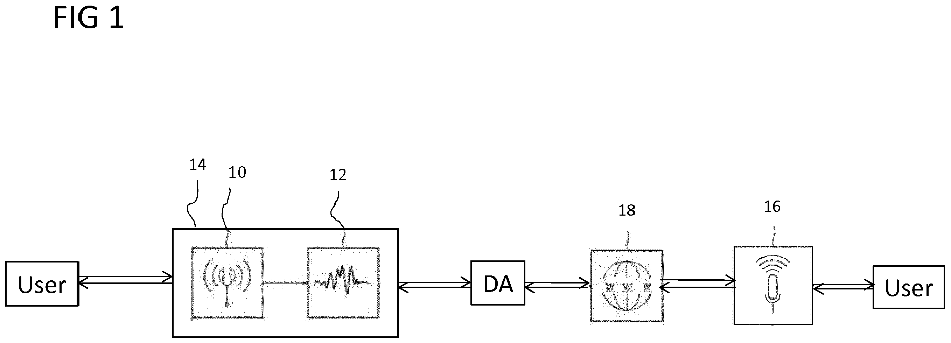

The present invention will be described in further detail with reference to the drawing, in which
- FIG 1: illustrates a schematic view of a voice control system for a domestic appliance according to a preferred embodiment of the present invention.

FIG 1 illustrates a schematic view of a voice control system for a domestic appliance DA according to a preferred embodiment of the present invention.

The voice control system comprises an acoustic sensor device 10, a voice recognition device 12 and a user recognition device 14 comprising the acoustic sensor device 10 and the voice recognition device 12. For example, the acoustic sensor device 10 is a microphone. Instead of the acoustic sensor 10 another sensor type may be used for detection of a presence of a user, e. g. an infrared sensor or a camera.

Further, the voice control system may comprise an audio output device, e.g. a loudspeaker, for communicating with the user. The voice control system is configured to communicate with the domestic appliance DA. Both the voice control communication device 16 and the domestic appliance DA are able to communicate with the internet 18, in particular they are able to communicate with each other via the internet 18. Preferably, the voice control system, or any part thereof, is a part, e.g. an integrated part, of a control unit of the domestic appliance DA. Further, the voice control system, or any part thereof, may be connected or connectable to the control unit of the domestic appliance DA.

The voice control system is provided for activating the connection of the domestic appliance DA to the voice control communication device 16 and/or to the internet 18. The voice recognition device 12 and/or the user recognition device 14 is or are configured to sense the presence of an authorised user. In particular, the voice recognition device 12 and/or the user recognition device 14 is or are configured such that the presence of the person adjacent to the domestic appliance DA is detected and/or specified.

Further, the acoustic sensor device 10 is capable of detecting and/or receiving a user generated input signal, for example the voice of the user, another audio signal from the user or noise generated by the user. For example, the acoustic sensor device 10, the voice recognition device 12 and/or the user recognition device 14 may be or comprise a decibel sensor.

The user recognition device 14 is configured to compare a parameter of the user generated input signal, e.g. the frequency, amplitude, frequency pattern and/or amplitude pattern, with a predetermined threshold value. Said predetermined threshold value is chosen in such a way that it is assigned to a certain amplitude of the user specific noise or reflects said certain amplitude, e.g. the loudness of the voice. For a proper operation, this assignment will have to be a matter of training or calibration at the moment of implementation of the domestic appliance DA. Alternatively, the producer of the domestic appliance DA may set it before the delivery to the user.

For example, the voice control system is capable of recognising, if the person adjacent to the sensor is speaking loudly. The acoustic sensor device 10 may be also replaced by another type of presence detection sensor, in particular a near field sensor, a touch sensitive sensor, an optical sensor, a camera and/or a vibration sensor. For example, the voice control system includes one or more sensors as applied in a smartphone.

The voice control system is configured in such a way that a communication of the voice control communication device 16 with the domestic appliance DA is possible only, if the user inputs a certain input signal recognised by the user recognition device 14. For example, the user recognition device 14 detects, if the user is speaking with certain loudness, or if the user outputs certain sequence of words, signals, tapping, knocking or the like.

For example, the communication between the domestic appliance DA and the voice control communication device 16 is activated or enabled only, if the specific input signal is received. By this way, the present invention ensures that the voice recognition device 12 is only active, if the user wants that. Thus, the privacy of the user is kept and a trusted connection is established. The voice control system considers the concerns of users, that the voice control communication device 16 may possibly be altered or tempered with and may send arbitrary information. Further, the voice control system may lock certain functions of the domestic appliance DA for specific users, which are identified by the user recognition device 14. For example, switching on and off the domestic appliance DA may be locked for specific users.

Additionally, the user may specify a signal, voice pattern or loudness range, which is stored in the voice control system or in the control unit. Said signal, voice pattern or loudness range may be used afterwards to activate the voice control system. By certain voice recognition parameters, e.g. frequency, an adult person can be distinguished from a child. Similarly, a tapping or tapping frequency or pattern may be recognized by a vibration sensor, e.g. MEMS. Alternatively, capacitive or inductive sensors may be used. In other words, the voice recognition device 12 and/or the user recognition device 14 may be configured to identify the age of the user or an age range the user belongs to. For example, there is implemented a child lock system by means of an acoustic sensor and a recognition device 12 or 14 which, when identifying or receiving a childish voice, will neglect a power-on of the domestic appliance DA.

In the case of a cooking hob, the voice recognition device 12 and/or the user recognition device 14 are activated only, if cookware is detected on the cooking surface of the cooking hob, in particular an inductive cookware on an induction cooking hob.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: acoustic sensor
- 12: voice recognition device
- 14: user recognition device
- 16: voice control communication device
- 18: internet
- DA: domestic appliance

## Claims

1. A voice control system for a domestic appliance (DA), wherein:
- the voice control system comprises at least one presence detection sensor, in particular at least one acoustic sensor (10),
- the voice control system comprises at least one voice recognition device (12) and/or at least one user recognition device (14),
- the voice control system is adapted to communicate with the domestic appliance (DA), and
- the voice control system is provided for activating the domestic appliance (DA) to communicate with a voice control communication device (16), in particular to process commands received from the voice control communication device (16), in dependence of the presence of an authorised user.

2. The voice control system according to claim 1,
**characterised in that**
the voice control system is an integrated part of a control unit of the domestic appliance (DA).

3. The voice control system according to claim 1 or 2,
**characterised in that**
the voice control system is connectable or connected to the control unit of the domestic appliance (DA), in particular by means of a wired connection.

4. The voice control system according to any one of the preceding claims,
**characterised in that**
the voice control system comprises an acoustic sensor (10), in particular a microphone, for communicating with the domestic appliance (DA).

5. The voice control system according to claim 4,
**characterised in that**
the acoustic sensor (10), in particular the microphone, is provided for receiving the voice of the user.

6. The voice control system according to any one of the preceding claims,
**characterised in that**
the voice control system comprises an audio output device, in particular a loudspeaker, for communicating with the user.

7. The voice control system according to any one of the preceding claims,
**characterised in that**
the voice recognition device (12) and/or the user recognition device (14) is/are adapted for identifying a user specific signal or characteristic, preferably a user specific acoustic signal, or a signal, in particular an acoustic signal, assignable to a specific user, particularly a human voice.

8. The voice control system according to any one of the preceding claims,
**characterised in that**
the voice recognition device (12) and/or the user recognition device (14) is/are adapted for identifying an authorised user.

9. The voice control system according to claim 7 or 8,
**characterised in that**
the voice recognition device (12) and/or the user recognition device (14) is/are configured to compare a characteristic parameter of the user's voice with a predetermined threshold value, preferably to compare a characteristic set of parameters of the user's voice with predetermined threshold values.

10. The voice control system according to claim 9,
**characterised in that**
the characteristic parameter or parameters of the user's voice is at least one of the frequency, amplitude, frequency pattern and/or amplitude pattern.

11. The voice control system according to any one of the preceding claims,
**characterized in that**
the voice control system is provided for triggering or prompting the domestic appliance (DA) to activate and/or deactivate the voice control communication device (16), in particular to switch on or off the voice control communication device (16), or to control the domestic appliance (DA) to forward or transmit a signal or command for activating or deactivating the voice control communication device (16).

12. A domestic appliance (DA), in particular a cooking appliance, connected with and/or comprising a voice control system according to any one of the preceding claims.

13. The domestic appliance (DA) according to claim 12,
**characterized in that**
the domestic appliance (DA) comprises a control unit communicating with or including at least a part of the voice control system according to any one of the claims 1 to 11.

14. A method for controlling a domestic appliance (DA) by means of a signal, in particular an acoustic signal, wherein a voice control system, in particular a voice control system according to any one of the claims 1 to 11, activates the domestic appliance (DA), in particular a domestic appliance (DA) according to claim 12 or 13, by means of at least one voice recognition device (12) and/or at least one user recognition device (14) to communicate with a voice control communication device (16), in particular to process commands received from the voice control communication device (16), in dependence of the presence of an authorized user.

15. The method of claim 14,
**characterized in that**
a user's signal and/or command, particularly one and the same user's signal and/or command, is received and/or processed, in particular simultaneously, by both the voice control system and the voice control communication device (16).
